(19) Europäisches Patentamt
European Patent Office
Office européen des brevets

(11) Numéro de publication: **0 108 015**
**A2**

(12) # DEMANDE DE BREVET EUROPEEN

(21) Numéro de dépôt: 83402061.2

(22) Date de dépôt: 24.10.83

(51) Int. Cl.³: C 22 B 60/02
C 22 B 3/00

(30) Priorité: 29.10.82 FR 8218142

(43) Date de publication de la demande: 09.05.84 Bulletin 84/19

(84) Etats contractants désignés: AT BE CH DE GB IT LI LU NL SE

(71) Demandeur: CECA S.A.
11 avenue Morane Saulnier
F-78141 Velizy Villacoublay(FR)

(72) Inventeur: Jdid, El Aid
6 allée Roermond
F-54500 Vandoeuvre les Nancy(FR)

(72) Inventeur: Blazy, Pierre
18 Place de la Carrière
F-54000 Nancy(FR)

(72) Inventeur: Bessiere, Jacques
6 Résidence La Haye Velaine en Haye
F-54840 Gondreville(FR)

(72) Inventeur: Tracez, Jean Charles
4 ter Av. Alphonse Cherrier
F-92330 Sceaux(FR)

(72) Inventeur: Haicour, Philippe
47 Avenue Trudaine
F-75009 Paris(FR)

(74) Mandataire: Boillot, Marc
SOCIETE NATIONALE ELF AQUITAINE Département
Propriété Industrielle Tour Aquitaine - Cedex No 4
F-92080 Paris la Défense(FR)

(54) **Procédé de récupération de métaux lourds à partir de solutions acides.**

(57) L'invention concerne la récupération de métaux lourds à partir de solutions hyperacides.

Le procédé consiste en une complexation de ces métaux par des complexants organophosphorés polydentés, suivie de l'élimination du complexe métallique, sédimentation, filtration.

Il s'applique notamment à la récupération de l'uranium et de terres rares de solutions d'acide phosphorique.

EP 0 108 015 A2

Croydon Printing Company Ltd.

CECA S.A. - DPI 4628

PROCEDE DE RECUPERATION DE METAUX LOURDS A PARTIR DE SOLUTIONS ACIDES.

La présente invention concerne l'utilisation de dérivés organophosphorés pour la récupération directe des métaux lourds à partir de leurs solutions dilués dans des milieux hyperacides et en particulier dans l'acide phosphorique industriel, par un procédé de complexation suivi de l'extraction du complexe par notamment la flottation.

Le phosphate naturel contient de l'uranium en quantité bien plus élevée que la plupart des constituants de la couche terrestre (quelques dizaines à quelques centaines de parties par million contre environ 3 parties par million).

Lors de l'attaque acide de ce phosphate, presque tout l'uranium passe dans l'acide phosphorique produit sous forme d'ions U IV et U VI. Ci-après, à titre indicatif, la composition d'un acide phosphorique produit à partir d'un minerai de Floride :
$P_2O_5$ : 29,37 % - $SO_4$ : 2,77 % - F : 2,15 % - matières diverses en solution : 0,18 % - $Fe_2O_3$ : 0,86 % - $Al_2O_3$ : 0,81 % - Mg O : 0,35 % - $U_3O_8$ : 166 ppm.

Avec ce minerai, on peut produire environ 500 g d'oxyde d'uranium $U_3O_8$ par tonne de $P_2O_5$, ce qui correspond à environ 150 t/an d'oxyde d'uranium dans une unité industrielle de 1 000 t/jour de $P_2O_5$.

Divers procédés ont été appliqués pour à la fois épurer l'acide phosphorique et produire de l'uranium et ceux qui ont eu un développement industriel sont les procédés d'extraction liquide-liquide que l'on peut classer en 3 groupes :

- l'extraction de l'uranium, préalablement réduit à l'état d'U IV, par les esters octylphényliques de l'acide orthophosphorique, (MOPPA - DOPPA), ou l'acide octylpyrophosphorique (OPPA) en solution dans le kérosène.
- l'extraction de l'uranium, préalablement oxydé à l'état de U VI, par un solvant constitué par un mélange d'acides bis (2 éthylhexyl) phosphorique (D2EHPA) et d'oxyde de trioctyl phosphine (TOPO).
- les procédés mixtes utilisant l'OPPA et le mélange D2EHPA et TOPO (connu par exemple par le brevet US 3 835 214).

D'autres procédés ont été préconisés qui mettent en jeu des solutions de réactifs plus complexes comme solvant d'extraction, tels les esters d'acides diphosphoniques décrits dans la demande de brevet français 2 460 958.

Ces procédés présentent l'inconvénient majeur d'un faible rendement d'extraction qui implique la multiplication des étages d'extraction : il faut de plus compliquer le procédé d'un cycle de régénération du solvant, également à plusieurs étages. Enfin, la mise en contact de l'acide avec les solvants réactifs est source d'une perte importante de solvants avec contamination de l'acide produit.

On a trouvé, et c'est en cela que réside l'invention, que l'on pouvait réaliser la complexation de l'uranium en solution dans des milieux hyperacides grâce à des dérivés organophosphorés complexants polydentés, avec récupération par sédimentation, filtration ou flottation directe.

La technique de récupération par flottation de composés en solution qui diffère des techniques traditionnelles de séparation de particules solides est connue depuis 1959. Elle fut introduite par Sebba F (Nature, London 1959, 154 1062). On en rappelle ici brièvement le principe.

On introduit dans la solution à extraire une quantité stoéchiométrique d'un réactif complexant susceptible de se combiner à l'ion à extraire et la combinaison obtenue est collectée en surface sous forme d'une écume au moyen de fines bulles de gaz produites au sein du milieu à épuiser. On a tendance à utiliser les termes de flottation par moussage lorsque la combinaison flottable est soluble dans le milieu initial et de flottation de précipité lorsque cette combinaison y est insoluble, sans que cette distinction soit toujours évidente. Nous retiendrons pour la commodité et la suite de la description le terme général de flottation ionique.

Cette technique a fait l'objet de nombreux travaux notamment dans le domaine de la décontamination des eaux industrielles ou radio actives. Pour la récupération de l'uranium, on doit citer également l'application à la séparation de ce métal de l'eau de mer (Kim Young S et al, Anal. Chem 1971 - 43 (11) 1370/3).

Aucun résultat n'a jamais été produit dans le domaine pourtant d'un haut intérêt industriel de solutions à faibles concentrations en uranium dans les milieux hyperacides.

La demanderesse a trouvé que ce résultat pouvait être obtenu, contre toute attente, à l'aide de complexants de type anionique et plus spécialement de produits complexants polydentés organophosphorés, pouvant agir comme collecteurs de flottation.

Il était en effet connu que l'uranium donnait en solution acide des complexes anioniques dès lors extractibles par des complexants cationiques comme les sels d'alkylpyridinium ou d'alkyltrimethylammonium. Ce fait avait même été confirmé dans le cas de solutions d'uranium dans l'acide chlorhydrique concentré d'où l'uranium était extractible avec le concours d'un collecteur cationique (Jacobelli - Turin et al Ind. Eng. Chem. Process, design & dev. 6 N° 2 1967).

Le caractère inattendu de l'invention réside dans cette possibilité de complexer, précipiter et flotter les ions uranium, en l'occurence sous la forme U IV ainsi que d'autres métaux lourds tels que les terres rares, le zirconium, le vanadium, le titane... à l'aide de collecteurs anioniques. On précise que ces réactifs anioniques doivent présenter les propriétés suivantes :

- être des complexants de l'uranium, et des autres métaux lourds susceptibles d'être extraits par cette technique ;
- être stables dans les milieux hyperacides ;
- être solubles ou tout au moins être parfaitement dispersibles dans ces milieux hyperacides. Cette propriété a évidemment une haute portée pratique. Elle différentie fortement ces produits des réactifs utilisés dans les techniques évoquées plus haut d'extraction liquide-liquide et pour lesquelles l'insolubilité est une propriété dominante.

La solubilité ou la dispersibilité du collecteur de flottation ionique est une propriété soit de la molécule elle-même, soit de la formulation sous laquelle le produit est utilisé.

Ces propriétés sont trouvées de façon plus précise dans le groupe chimique des dérivés organophosphorés polydentés de formule générale :

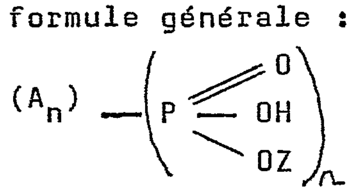

(I)

où : $A_n$ est un groupement hydrocarboné n-valent, pouvant également contenir des hétéroatomes tels que N, O, P.

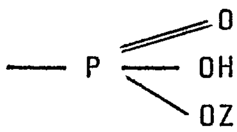

est le groupe responsable partiellement ou en totalité de l'activité complexante, répété n fois,
Z est H ou une chaine aliphatique de 1 à 24 carbones
n est un entier supérieur à 1, généralement compris entre 2 et 5.

Quand le complexant conduit à un complexe métallique par lui-même hydrophobe, sa structure comporte des éléments aliphatiques à plus ou moins longue chaine, qui se trouvent soit dans le groupe phosphoré, soit dans le groupement $A_n$.

Au groupe des complexants à chaînes aliphatiques qui se trouvent dans le groupe phosphoré, appartiennent les composés du type diesters phosphoniques de formule:

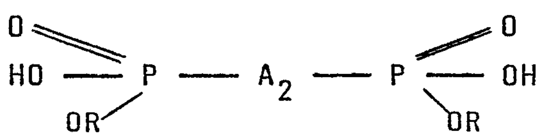 (II)

où : $A_2$ est un petit groupe hydrocarboné divalent et R est un reste alkyle à 4-24 atomes de carbone.

De tels produits sont décrits pour leur fabrication et leur application à l'extraction liquide-liquide dans la demande de brevet français 2 460 958.

En donnant à n la valeur 3 on obtient un autre groupe de composés polyesters phosphoniques, comprenant par exemple les esters triphosphoniques :

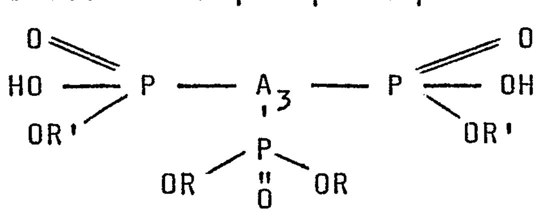 (III)

ou $A_3$ est un petit groupe hydrocarboné trivalent
R' un reste aliphatique
R un groupe aliphatique comprenant de 4 à 24 carbones.

De tels produits sont décrits pour leur fabrication et leur application à l'extraction liquide-liquide dans la demande de brevet français 2 460 960.

Au groupe des complexants à chaine aliphatique faisant partie du groupement chimique $A_n$, appartiennent également les structures du type acides alkylaminopolyméthylènephosphonique comme par exemple :

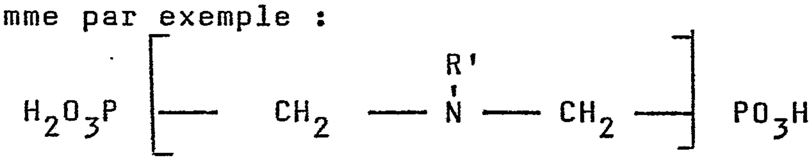
(IV)

et tous les acides méthylènepolyphosphoniques dérivant des alkylpolyméthylène polyamines.

Les esters aliphatiques dérivant des acides nitrilo tris méthylène phosphonique, éthylènediaminetetraméthylènephosphoniques et leurs homologues font évidemment partie des réactifs compris dans l'invention.

Quand le complexant conduit à un complexe métallique non hydrophobe, sa structure ne comporte pas de chaine aliphatique particulièrement longue. On peut citer, dans cette classe de produits, des compléxants par ailleurs très connus, comme les méthylène phosphonates dérivés des poly éthylène poly amines.

Un produit particulièrement intéressant pour l'invention est le dérivé de l'éthylène diamine

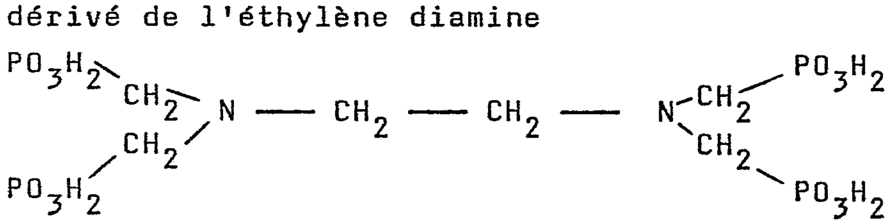
(V)

Ces produits conduisant à des complexes métalliques non hydrophobes donnent lieu à produits flottables quand on les associe avec un coréactif hydrophobe. Ce coréactif, pour des raisons de comptabilité, est avantageusement choisi dans la classe des composés de formule générale I.

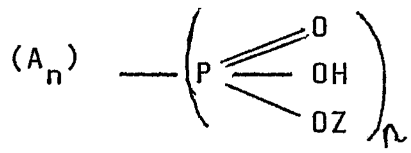

où : n = 1 ou 2,

et comportant obligatoirement un reste aliphatique long 4 à 24 carbones dans Z ou dans $A_n$. Sont particulièrement avantageux les acides alkyl aminophosphoniques simples du type (IV) précédemment décrits.

EXEMPLE I

Dans une liqueur constituée d'acide phosphorique 5,5 M enrichi en nitrate d'yttrium pour une teneur de 200 ppm en yttrium métal, on introduit 1000 ppm d'un réactif de type III le diméthyl P1 P3 - dioctyl P1 P2 - ester de l'acide propane 1-2-3 trisphosphonique.

On obtient presque instantanément un précipité récupérable par filtration qui rassemble 92 % de l'yttrium initialement présent.

EXEMPLE II

La solution yttrique de l'exemple I est introduite dans un dispositif constitué d'un vase, muni d'un déversoir dans sa partie supérieure et d'un verre fritté dans sa partie inférieure. On ajoute 1 000 ppm du réactif précédent, et on provoque dans la solution un dégagement de bulles d'air pendant 30 minutes environ. La mousse recueillie au déversoir rassemble un précipité blanc qui contient 89 % de l'yttrium introduit.

EXEMPLE III

On répète les expériences de précipitation et de flottation décrites dans les exemples I et II en utilisant comme solution métallique une liqueur constituée d'acide phosphorique

5,5 M enrichie artificiellement en nitrate d'uranyle, et dont l'uranium a été ramené à la valence IV par réduction par de la poudre de fer. Cette liqueur titre 120 ppm d'uranium métal.

L'essai est effectué avec l'acide octylpyrophosphonique (OPPA), l'acide di-2 éthylhexylphosphonique (D2EHPA), l'oxyde de trioctylphosphine (TOPO), qui sont des réactifs connus d'extraction liquide-liquide de l'uranium, et avec l'ester triphosphonique, composé selon l'invention, de l'exemple I.

L'OPPA précipite partiellement l'uranium (le titre en uranium dans le précipité est de 3,8 %), mais il n'y a aucune récupération par flottation.

Le D2EHPA et le TOPO donnent des précipités riches en uranium, (respectivement 7,9 % et 5,2 % d'uranium) mais avec un très mauvais rendement. Il n'y a aucune récupération par flottation.

L'ester triphosphonique précipite fortement l'uranium (taux de récupération 95%) ; le précipité est totalement flottable et titre 1 % de fer et 4,8 % d'uranium.

L'exemple montre l'avantage absolu de produits selon l'invention sur les réactifs couramment utilisés pour l'extraction liquide-liquide.

EXEMPLE IV

Dans le dispositif expérimental décrit dans l'exemple II, on introduit une liqueur constituée par de l'acide phosphonique 5,5 M enrichie en uranium pour une teneur en U de 10 M. Le sel utilisé est l'acétate d'uranyle, et l'uranium est ramené à l'état de U IV par de la poudre de fer.

On introduit dans cette solution de l'acide éthylènediamine tetraméthylène phosphonique, (réactif IV) à la concentration de 7.10 M, ainsi que le coréactif de type V, choisi en l'occurence comme l'acide héxylaminodiméthylènephosphonique.

Après passage de bulles d'air pendant 30 minutes, on a recueilli une mousse qui rassemble sous forme d'un précipité vers 80 % de l'uranium introduit.

EXEMPLE V

La même expérience est répétée sur un acide phosphorique industriel issu d'un minerai de Floride, et titrant environ $5.10^{-4}M$ en uranium. On obtient dans la partie flottée, une récupération de 78 % de l'uranium présent dans la solution. Le produit collecté rassemble évidemment d'autres métaux présents dans l'acide industriel, dont le fer et les terres rares (Yttrium et lanthanides), le zirconium, le vanadium, le titane ... La teneur du précipité sec récupéré dépasse 2 % en uranium.

EXEMPLE VI

Cet exemple illustre l'utilisation d'un réactif par lui-même hydrophobe. On réalise une extraction en utilisant le dispositif expérimental précédant. L'acide utilisé est un acide phosphorique industriel. Le réactif utilisé est ici le dilaurylester d'un acide propène-2- diyle-1,2-diphosphonique, décrit par ailleurs dans la demande de brevet français 2 460 958.

On introduit une quantité de réactif telle que sa concentration molaire soit égale à 4 fois la concentration de l'acide en uranium. La flottation est obtenue dans ce cas sans apport de coréactif (complexe d'uranium hydrophobe). Le taux de récupération est de 71 % à température ambiante et le précipité flotté titre 7.5 % de l'extrait en uranium.

EXEMPLE VII

On procède à une précipitation par flottation dans les mêmes conditions que dans l'exemple VI mais la température est maintenue à 60°C ; le rendement avoisine 81 % et le flotté titre 10 % d'uranium.

EXEMPLE VIII

On opère aussi dans les mêmes conditions que dans l'exemple VI, mais le rapport réactif/uranium est ici porté à 6. Le taux de récupération atteint 96 % et la teneur en uranium du précipité flotté atteint 7 % de l'extrait sec.

On voit ainsi qu'il est possible de récupérer l'uranium des solutions concentrées d'acide phosphorique par un procédé simple avec un rendement satisfaisant. Ce procédé n'est d'ailleurs pas limitatif et s'applique à l'extraction directe de métaux lourds à partir de solutions hyperacides. Sont évidemment compris, dans l'invention tous les autres modes d'extraction directe des métaux lourds, sous forme de leur complexe anionique précipité, comme la sédimentation, la filtration...

## REVENDICATIONS

1 - Procédé de récupération de métaux lourds de solutions hyperacides caractérisé en ce qu'on opère par complexation au moyen d'un complexant pris dans le groupe des dérivés organophosphorés polydentés de formule :

(I) 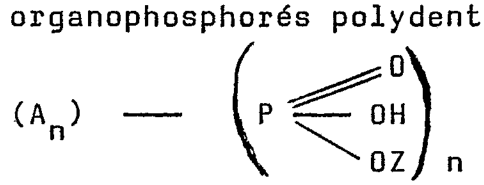

où : $(A_n)$ est un groupement hydrocarboné n-valent, pouvant contenir des hétéroatomes tels que N, O, P.

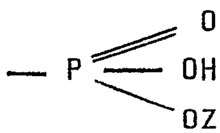

est le groupe responsable partiellement ou en totalité de l'activité complexante, répété n fois

Z est H ou une chaine aliphatique de 1 à 24 carbones

n est un entier supérieur à 1, généralement compris entre 2 et 5.

2 - Procédé selon la revendication 1 caractérisé en ce que le complexe formé est éliminé par flottation.

3 - Procédé selon la revendication 1 caractérisé en ce que le complexe formé est un précipité éliminé par sédimentation ou filtration.

4 - Procédé selon les revendications 1, 2 ou 3 caractérisé en ce que le complexant conduit à un complexe métallique hydrophobe et comporte des éléments aliphatiques à plus ou moins longues chaines.

5 - Procédé selon la revendication 4 caractérisé en ce que le complexant appartient au groupe des composés du type diester phosphoniques de formule :

(II) 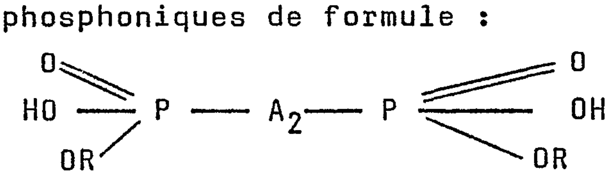

ou : $A_2$ est un petit groupe hydrocarboné divalent et R est un reste alkyle à 4-24 atomes de carbone.

6 - Procédé selon la revendication 4, caractérisé en ce que le complexant appartient au groupe des composés du type esters triphosphoniques de formule :

(III) 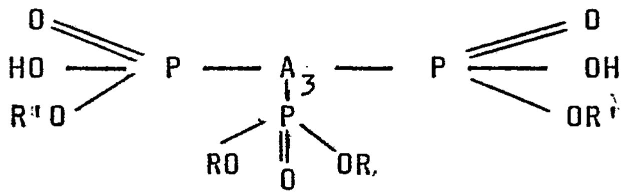

où $A_3$ est un petit groupe hydrocarboné trivalent,
R' un reste aliphatique court ou long
R un reste aliphatique comprenant 4 à 24 atomes de carbone.

7 - Procédé selon la revendication 4, caractérisé en ce que le complexant appartient au groupe des acides alkylaminopolyméthylène phosphoniques comme :

(IV) 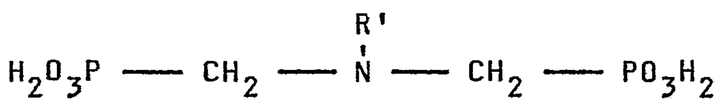

et leurs esters.

8 - Procédé selon la revendication 3 caractérisé en ce que le complexant conduit à un complexe métallique non hydrophobe et que sa structure ne comporte pas de chaine aliphatique particulièrement longue.

9 - Procédé selon la revendication 8 caractérisé en ce que le complexant appartient au groupe des acides méthylènes phosphoniques dérivés des polyéthylènepolyamines.

10- Procédé selon la revendication 9 caractérisé en ce que le complexant est le dérivé de l'éthylène diamine de formule :

(V) 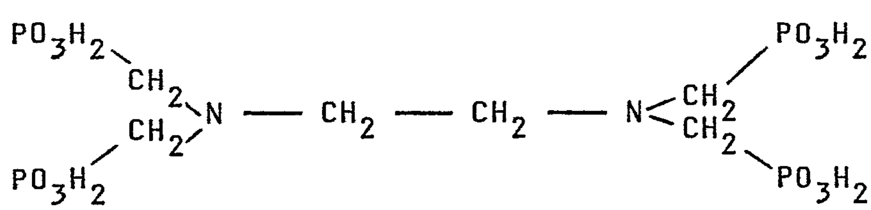

11 - Procédé selon la revendication 2 caractérisé en ce que le complexant conduit à un complexe métallique non hydrophobe, que sa structure ne comporte pas de chaine aliphatique particulièrement longue et qu'on y associe un coréactif hydrophobe.

12 - Procédé selon la revendication 11 caractérisé en ce que le complexant appartient au groupe des acides méthylènes phosphoniques dérivés des polyéthylènepolyamines.

13 - Procédé selon la revendication 12 caractérisé en ce que le complexant est le dérivé de l'éthylènediamine de formule :

(VI) 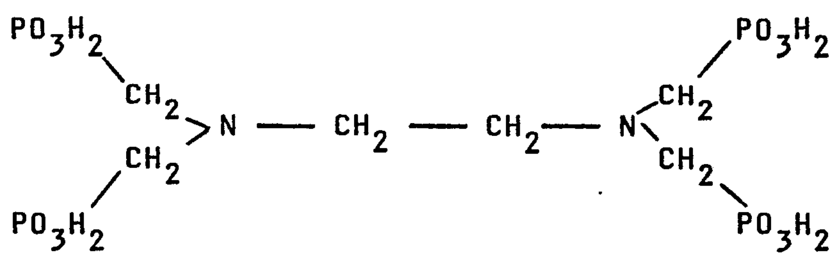

14 - Procédé selon la revendication 11 caractérisé en ce que le coréactif est un acide alkylaminopolymethylène-phosphonique de formule :

(VII) 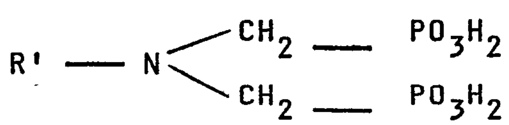

15 - Application du procédé selon l'une quelconque des revendications précédentes à l'extraction de l'uranium et des métaux lourds tels que les terres rares, le zirconium, le vanadium et le titane, des solutions d'acide phosphorique.